Europäisches Patentamt

European Patent Office

Office européen des brevets

(11) Veröffentlichungsnummer : **0 185 650**
**B1**

(12) **EUROPÄISCHE PATENTSCHRIFT**

(45) Veröffentlichungstag der Patentschrift :
28.09.88

(21) Anmeldenummer : 85890314.9

(22) Anmeldetag : 20.12.85

(51) Int. Cl.⁴ : **F 16 L 11/12**, F 17 D   5/00,
G 01 B 11/16

(54) Schlauch, insbesondere Hydraulikdruckschlauch.

(30) Priorität : 21.12.84 AT 4079/84

(43) Veröffentlichungstag der Anmeldung :
25.06.86 Patentblatt 86/26

(45) Bekanntmachung des Hinweises auf die Patenterteilung : 28.09.88 Patentblatt 88/39

(84) Benannte Vertragsstaaten :
BE DE FR GB IT

(56) Entgegenhaltungen :
EP-A- 0 010 835
DE-A- 2 800 798
DE-A- 3 224 273
US-A- 3 749 814

(73) Patentinhaber : VOEST-ALPINE Aktiengesellschaft
Muldenstrasse 5
A-4020 Linz (AT)

(72) Erfinder : Schellenberg, Eduard, Dipl.-Ing.
Liebermannweg 32
A-4020 Linz (AT)
Erfinder : Steinbrucker, Gerhard, Dipl.-Ing.
Bessemerstrasse 30
A-8740 Zeltweg (AT)

(74) Vertreter : Matschnig, Franz, Dipl.-Ing.
Siebensterngasse 54 Postfach 452
A-1071 Wien (AT)

## Beschreibung

Die Erfindung bezieht sich auf einen Schlauch, insbesondere Hydraulikdruckschlauch, in dessen Wandung eine Armierung, z. B. ein Armierungsgewebe, eingebettet ist, und die Armierung zumindest einen elektrischen Meßdraht aufweist, dessen Enden aus der Wandung zu elektrischen Anschlüssen geführt sind. Solch ein Schlauch ist aus DE-A-3 224 273 bekannt.

Druckschläuche, wie sie z. B. in Hydraulikanlagen bei Maschinen Verwendung finden, bestehen aus einer Umhüllung, z. B. aus Kunststoff, in die oft ein Verstärkungsgewebe oder Verstärkungsdrähte eingebettet ist bzw. sind. Diese Verstärkungen können im Zuge des Extrudierens während der Schlauchherstellung in den Mantel eingebracht werden.

Druckschläuche sind vielfältigen Belastungen ausgesetzt ; so werden die Hydraulikschläuche beispielsweise von Baggern oder ähnlichen Maschinen nicht nur von innen her mit dem Druck der Hydraulikflüssigkeit belastet, es treten auch ständige Biegebeanspruchungen auf. Überdies kommt es gelegentlich zu plötzlich auftretenden Stoßbeanspruchungen, etwa durch Steinschlag, Anstoßen eines Baggerarmes an Hindernisse etc. Auch sind Beschädigungen durch Einklemmen des Schlauches zwischen bewegte Teile möglich.

Durch diese Beanspruchungen wird die Lebensdauer des Schlauches verkürzt und bei Verletzungen kann es nicht nur zu Spontanbrüchen sondern auch zu späteren Brüchen kommen, die völlig überraschend auftreten, falls die Verletzung des Mantels nicht bemerkt wurde.

Besonders in Bereichen der Technik mit hohen Sicherheitsanforderungen, wie z. B. im Bergbau, wären ständige Informationen über den Zustand von Hydraulikschläuchen, Kühlwasserschläuchen, Lutten zur Bewetterung und Staubabsaugung und dgl. mehr wünschenswert.

Es ist zwar bekannt, auf mechanisch beanspruchte Teile Dehnmeßstreifen z. B. aufzukleben, um auf diese Weise über die Widerstandsänderung der Dehnmeßstreifen Aufschluß über den Spannungszustand des beanspruchten Teiles zu erhalten. Auf Schläuche angewandt, ergibt sich jedoch kein befriedigendes Ergebnis, da nur ausgesuchte Stellen des Schlauches meßtechnisch erfaßt werden und im rauhen Betrieb mancher Maschinen ein besonderer mechanischer Schutz für die Dehnmeßstreifen erforderlich wäre.

Aus der DE-A-33 05 234 geht ein zugfester Draht als bekannt hervor, in den ein Lichtwellenleiter mit einer Ummantelung aus einer inhomogen strukturierten Kunststoffschicht eingebettet ist. Mittels eines Licht-Durchgangsprüfgerätes kann der Draht auf Zug, Bruch oder Biegung überwacht werden, da sich bei diesen Beanspruchungen auch die Dämpfung des Lichtwellenleiters ändert.

Weiters ist es aus der DE-A-29 37 824 bekannt geworden, in analoger Weise, d. h. unter Verwendung eines Lichtwellenleiters, Bauteile aus Kunststoff oder Beton zu überwachen.

Die Verwendung von Lichtleitfasern zur Bruchüberwachung bruchgefährdeter Bauteile geht aus der EP-A-25 815 hervor und die DE-A-30 47 308 zeigt ganz allgemein die Verwendung von Lichtleitfasern bei akustischen oder druckempfindlichen Sensorelementen.

Aus der GB-A-1 545 209 und 1 545 210 sind Dehnungs-Meßwertgeber bekannt geworden, bei welchen ein Meßdraht zwischen zwei Endstücken, an welchen die Kraft angreift, in verschiedener Weise, z. B. spiralförmig geführt ist. Der Meßdraht nimmt hiebei die gesamte Zugkraft auf. Zum Schutz vor äußeren Einflüssen kann die Anordnung von einer Schutzhülle umgeben sein. Die Überwachung eines mechanisch beanspruchten Schlauches durch Meßdrähte ist durch die Patentschriften jedoch nicht nahegelegt.

Es ist ein Ziel der Erfindung, einen armierten Schlauch zu schaffen, der die Möglichkeit einer ständigen Überwachung seiner mechanischen Belastung bietet und dennoch einfach und ohne wesentlich erhöhten Kostenaufwand herstellbar ist. Starke mechanische Beanspruchungen von Schläuchen sollen rechtzeitig erkannt werden, sodaß Abhilfe, z. B. durch Auswechseln des entsprechenden Schlauchstückes, geschaffen werden kann.

Dieses Ziel läßt sich mit einem Schlauch der eingangs genannten Art erreichen, bei welchem erfindungsgemäß der Widerstand des Meßdrahtes sich unter dem Einfluß mechanischer Kräfte ändert.

Die Bestimmung des Widerstandes des Meßdrahtes ist einfach und zuverlässig durchführbar und der Meßdraht bzw. Meßdrähte kann bzw. können bei der Schlauchherstellung zugleich mit der Armierung während der Extrusion in die Wandung eingebracht werden, sodaß kein zusätzlicher Arbeitsgang im Herstellungsverfahren erforderlich ist.

Änderungen des Widerstandes sind ein Hinweis auf mechanische Beanspruchungen des Schlauches und soferne diese Beanspruchung einen festgelegten Maximalwert überschreiten, kann z. B. ein Alarmsignal gegeben oder eine Notabstellung der Maschine vorgenommen werden. Auch kann aus den Änderungen des Widerstandes auf die Restlebensdauer des Schlauches geschlossen werden.

Um Kräfte sowohl in Längsrichtung als auch in Umfangsrichtung des Schlauches gleichermaßen aufnehmen zu können, empfiehlt es sich, wenn der Meßdraht innerhalb der Wandung wendelförmig verläuft.

Will man bevorzugt Kräfte in Längsrichtung der Schlauchwandung erfassen, kann der Meßdraht in einem Schlauchstück in Längsrichtung zickzack um den Umfang verlaufen.

Die Empfindlichkeit der Messung kann erhöht werden, falls der Meßdraht als langgestreckter Dehnmeßstreifen ausgebildet ist.

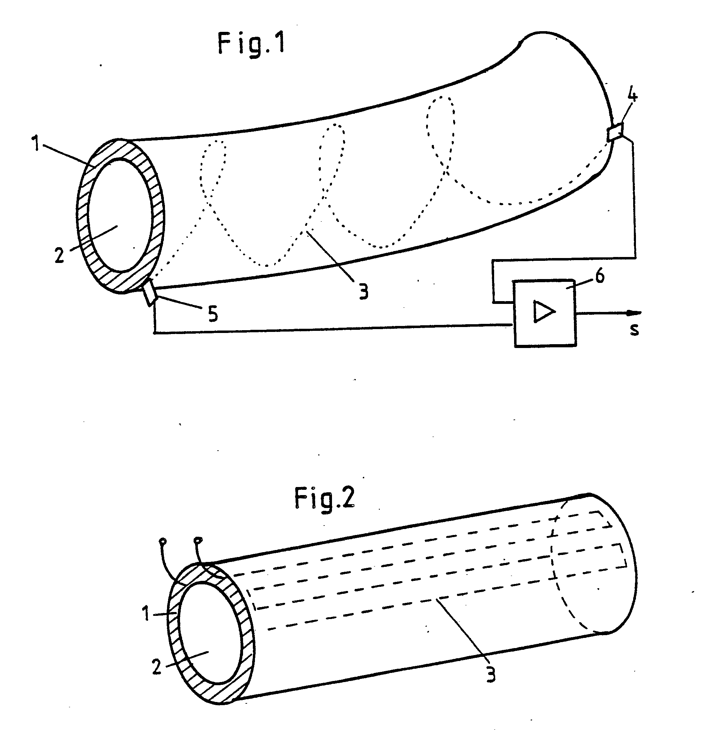

Die Erfindung samt ihren weiteren Vorteilen und Merkmalen ist im folgenden an Hand beispielsweiser Ausführungsformen näher erläutert, die in der Zeichnung veranschaulicht sind. In dieser zeigen Fig. 1 in schaubildlicher, schematischer Darstellung ein Schlauchstück nach der Erfindung mit einem wendelförmig verlaufenden Meßdraht und Fig. 2 in einer ebensolchen Ansicht ein Schlauchstück nach der Erfindung, bei welchem der Meßdraht in Längsrichtung zick-zack verläuft.

Wie Fig. 1 zeigt weist ein Schlauch eine Wandung 1 auf, die vorzugsweise aus Kunststoff besteht und den Hohlraum 2 des Schlauches umgibt und in der eine nicht gezeigte Verstärkung, wie ein Gewebe, Drahteinlagen od. dgl. eingebettet ist. Gemäß der Erfindung ist in der Wandung 1 außerdem ein wendelförmig verlaufender Meßdraht 3 eingebettet, der an den Enden des Schlauchstückes aus der Wandung 1 geführt und mit elektrischen Anschlüssen 4,5 versehen ist.

Die beiden Enden des Meßdrahtes 3 sind über die Anschlüsse 4,5 mit dem Eingang einer Widerstandsmeßeinrichtung 6 verbunden. Hierbei kann es sich um eine Meßbrücke mit Verstärker handeln. Die Meßeinrichtung liefert ein Signal s, das dem Widerstand des Meßdrahtes proportional ist.

Bei Beanspruchung des Schlauchmantels 1, z. B. bei Dehnung durch Druckerhöhung, Quetschen von außen, Längszug oder Biegung mit kleinem Biegeradius werden zumindest Teile des Meßdrahtes 3 mit Zugspannungen belastet, sodaß sich dessen Widerstand ändert. Maßgeblich hiefür ist der sogenannte k-Faktor, welcher das Verhältnis der relativen Widerstandsänderung R/R zur relativen Längenänderung 1/1 angibt. Dieser Faktor beträgt für Konstantan-Draht etwa 2, kann bei Halbleitern aber um zwei Zehnerpotenzen höher liegen.

Die Widerstandsänderung führt zu einer Änderung des Ausgangssignales der Meßanordnung, sodaß das Signal s repräsentativ für die mechanische Belastungen des Schlauches ist. Auf diese Weise läßt sich eine Gefährdung des Schlauches rechtzeitig erkennen, bzw. es kann über das Signal s, händisch oder automatisch, eine Maschine, z. B. eine Pumpe, abgeschaltet werden. Ein langsames Ansteigen des Widerstandes des Meßdrahtes 3 ohne gerade auftretende mechanische Belastung läßt auch einen Schluß über die zu erwartende Restlebensdauer des Schlauches zu.

Üblicherweise werden an einer Maschine mehrere Schlauchstücke zu überwachen sein. In diesem Fall werden die einzelnen Meßstellen zweckmäßigerweise mit einem Scanner abgetastet. Auch kann die Verarbeitung des Signales s in einem Mikroprozessor erfolgen, in dem z. B. auch ein Mittelwert der Schlauchbelastung (gemittelt über die Zeit und mehrere Schlauchstücke einer Maschine) errechnet werden kann, der wiederum Auskunft über die Gesamtbelastung der Maschine selbst gibt.

Bei der Ausführung nach Fig. 2 verläuft der Meßdraht 3 zick-zack in Längsrichtung eines Schlauchstückes 1 und es ist evident, daß bei dieser Ausführungsform die größten Widerstandsänderungen des Meßdrahtes beim Auftreten von Zugspannungen in Längsrichtung des Schlauches erfolgen, d. h. bei Aufbringen von Zug auf den Schlauch oder bei Knicken des Schlauches. Die meßtechnische Auswertung kann wiederum mittels eines Brückenverstärkers erfolgen.

Es sei an dieser Stelle erwähnt, daß an Stelle eines Meßdrahtes auch ein langgestreckter Dehnmeßstreifen in den Mantel eingebettet sein kann, wodurch die Empfindlichkeit der Anordnung beachtlich gesteigert wird. Der Meßdraht muß keinesfalls kreisförmigen Querschnitt aufweisen, er kann z. B. bandförmig sein. Da ein Armierungsdraht des Schlauchmantels als Meßdraht verwendet wird bzw. ein Meßdraht gleichzeitig eine Armierungsfunktion haben kann, ergibt sich kein zusätzlicher Aufwand bei der Herstellung des Schlauches.

Es sei noch erwähnt, daß der Meßdraht in möglichst engen Wendeln in der Schlauchwandung verlaufen soll, falls man bevorzugt Kräfte in Querrichtung der Schlauchwandung erfassen will.

## Patentansprüche

1. Schlauch, insbesondere Hydraulikdruckschlauch, in dessen Wandung (1) eine Armierung, z. B. ein Armierungsgewebe, eingebettet ist, und die Armierung zumindest einen elektrischen Meßdraht (3) aufweist, dessen Enden aus der Wandung zu elektrischen Anschlüssen (4, 5) geführt sind, dadurch gekennzeichnet, daß der Widerstand des Meßdrahtes (3) in Abhängigkeit von auf ihn einwirkenden mechanischen Kräften veränderlich ist.

2. Schlauch nach Anspruch 1, dadurch gekennzeichnet, daß der Meßdraht (3) innerhalb der Wandung (1) wendelförmig verläuft (Fig. 1).

3. Schlauch nach Anspruch 1, dadurch gekennzeichnet, daß der Meßdraht (3) in einem Schlauchstück in Längsrichtung zick-zack um den Umfang verläuft (Fig. 2).

4. Schlauch nach einem der Ansprüche 1 bis 3, dadurch gekennzeichnet, daß der Meßdraht als langgestreckter Dehnmeßstreifen ausgebildet ist.

## Claims

1. Hose, particularly hydraulic pressure hose, in the wall (1) of which a reinforcement, e. g. a reinforcing fabric, is embedded, the reinforcement having at least one electrical measuring wire (3), the ends of which are led outside the wall to electrical connectors (4, 5), characterised in that the resistance of the measuring wire (3) is variable in dependence upon mechanical forces acting upon it.

2. Hose according to claim 1, characterised in that the measuring wire (3) extends helically within the wall (1) (Fig. 1).

3. Hose according to claim 1, characterised in that the measuring wire (3) extends longitudinally in a hose section, in a zig-zag path around the circumference (Fig. 2).

4. Hose according to any of claims 1 to 3, characterised in that the measuring wire is formed as longitudinally-extending strain-measuring strips.

## Revendications

1. Tuyau souple, en particulier tuyau sous pression hydraulique, dans la paroi (1) duquel est incorporée une armature, par exemple une armature tissée, et dans lequel l'armature présente au moins un fil (3) de mesure électrique, dont les extrémités sortent de la paroi pour rejoindre des connexions électriques (4, 5), tuyau caractérisé en ce que la résistance (électrique) du fil (3) de mesure est variable en fonction des forces mécaniques qui s'exercent sur lui.

2. Tuyau selon la revendication 1, caractérisé en ce que le fil (3) de mesure est disposé en forme d'hélice à l'intérieur de la paroi (1) (figure 1).

3. Tuyau selon la revendication 1, caractérisé en ce que le fil (3) de mesure est disposé dans un tronçon de tuyau, en étant placé en zigzag dans le sens longitutinal, sur le pourtour du tuyau (figure 2).

4. Tuyau selon une des revendications 1 à 3, caractérisé en ce que le fil de mesure est constitué par une bande de mesure d'allongement s'étendant sur une grande distance.

Fig.1

Fig.2